# EUROPEAN PATENT SPECIFICATION

(11) **EP 3 402 759 B1**
(45) Date of publication and mention of the grant of the patent: **09.06.2021**
(21) Application number: 16822238.8
(22) Date of filing: 21.12.2016
(51) Int. Cl.: C03C 8/16, C03C 8/18, C03C 17/00, H01B 1/16, H01B 1/22

(54) **PROCESS, USE AND ARTICLE**
VERFAHREN, VERWENDUNG UND ARTIKEL
PROCÉDÉ, UTILISATION ET ARTICLE

(30) Priority: 12.01.2016 GB 201600573
(43) Date of publication of application: 21.11.2018
(73) Proprietor: Johnson Matthey Public Limited Company, London EC4A 4AB (GB)
(72) Inventor: HOPPE, Alexander, 6222 NZ Maastricht (NL); SCHUMANS, Maurice Theodoor Maria, 6222 NZ Maastricht (NL)
(74) Representative: Atkinson, Ian Anthony
(86) International application number: PCT/GB2016/054014
(87) International publication number: WO 2017/121982

(56) References cited:
- EP-A1- 2 664 503
- EP-A1- 2 896 602
- EP-A2- 0 977 208
- EP-A2- 1 713 092
- US-A1- 2006 022 173
- DATABASE WPI Week 201213 Thomson Scientific, London, GB; AN 2012-B27591 XP002767620, -& JP 2012 022841 A 2 February 2012 (2012-02-02)

## Description

### Field of the Invention

The present invention relates to a process for the production of an article of glass with an applied electrically conductive grid and in particular to process for providing such an article of glass having superior connector adhesion strength when an electrical connector is soldered to the applied conductive layer by means of a lead-free solder. The invention has particular application in the automotive and electronic industries.

### Background to the Invention

The use of conductive pastes as components for functional decoration on glass is well known, for example in the automotive field. Such pastes usually take the form of a solid-liquid dispersion, where the solid phase comprises finely divided particles of a conductive metal or mixture of conductive metals and an inorganic binder, and the liquid vehicle for the dispersion is typically an organic liquid medium. Additional materials may be added in small quantities (generally less than about 3% by weight of the composition) to modify the properties of the composition and these include staining agents, rheology modifiers, adhesion enhancers and sintering modifiers. As an example, conductive pastes may be used to form electrically conductive grids for defrosting or demisting windows and mirrors in cars, etc., by producing heat when powered. Conductive pastes are increasingly used in glass applications in a variety of industries, for instance in pop-up displays and optical enhancements.

The metals used in the preparation of conductive pastes are typically selected from silver, gold, platinum and palladium. The metal can be used either in isolation or as a mixture which forms an alloy upon firing. Common metal mixtures include platinum/gold, palladium/silver, platinum/silver, platinum/palladium/gold and platinum/palladium/silver. The most common systems used in the manufacture of heating elements are silver and silver/palladium.

The inorganic binder typically comprises a glass or glass-forming material. Owing to environmental considerations, the use of lead-containing binders is undesirable; however materials such as bismuth and/or zinc borosilicate may be used. These materials function as a binder both within the composition and between the composition and substrate onto which the composition is coated.

The role of the organic medium is to disperse the particulate components and to facilitate the transfer of the composition onto a substrate. During firing of a conductive paste, which has been applied to a substrate, the organic medium is removed.

In the manufacture of windows and mirrors for use in the automotive industry, a conductive paste may be screen-printed through standard mesh screen onto flat, unformed window glass. The printed composition may be dried and is then fired in air to form an electrically conductive layer. After firing, the softened window glass is shaped by compression or sagging in a mould, then quenched by rapid cooling or slowly cooled under atmospheric conditions. The organic medium is removed by vaporization and pyrolysis in the firing cycle. A continuous electrically conductive path is formed during firing by sintering of the glass and silver, and having the glass act as a binder for the silver particles. A connector is then soldered onto the surface of the formed electrically conductive layer to establish a connection to a power source or a signal source.

Generally, the soldering material is an alloy provided on the connector, that is, the soldering alloy (solder) is pre-accommodated on the connector (a pre-soldered connector). Adhesion of such a pre-soldered connector to a conductive grid may be effected by placing the connector in position on the grid and applying heat in a manner such that the solder melts and forms a joint with the conductive grid. Lead-containing alloys, such as Pb-Sn alloys were commonly used, but because of environmental and legislative issues, manufacturers are switching to lead-free solders, as well as to lead-free connectors.

The most widely used Pb-free solders in the electronics industry contain a high tin (Sn) content, typically in excess of 94 wt. %, and further contain silver (Ag), copper (Cu), or both, and possibly other elements such as nickel (Ni), cobalt (Co), zinc (Zn), bismuth (Bi), etc. Soldering alloys that contain Sn, Ag, and Cu are referred to as SAC solders. If they contain an additional element they are usually referred to as SACX, where X represents the additional element. These solders have a higher melting point than the traditional Pb-Sn solders, leading to higher peak reflow temperatures which can lead to undesirable thermal loading effects including those associated with differential thermal expansion-induced stresses. SAC and SACX Pb-free solders have a higher elastic modulus and yield point than Pb-Sn solders. Furthermore, the yield point of Pb-free alloys, which essentially puts a limitation on the magnitude of the stress the joint can be exposed to, is more sensitive to the strain rate of the applied stress than for PbSn alloys. These combined mechanical properties of Pb-free solders tend to make joints that are more susceptible to brittle failure than joints made from PbSn solders. This is especially true when the joints are exposed to stresses applied at high strain rates, such as those that may occur during testing, handling, and assembly.

Further, the higher temperatures needed to melt lead-free solders and the difference in solidification properties have created problems when used with fired silver pastes. The desired lead-free soldering may lead to failure, for example in the pullstrength of the connector, and/or cracks in the material underneath or immediately adjacent to the position at which the connector is soldered on the substrate. Further, compared to PbSn solders, lead-free soldering may be less resistant to weathering, and chemical and mechanical ageing.

The use of lead-free solders therefore requires means for improving the strength of connector attachment, while meeting other properties required in the end product, such as good weathering, chemical and mechanical resistance, glass adhesion, printability, conductivity, tarnish resistance.

EP 1 506 944 A1 relates to a thick-film conductor paste for automotive glass. Crystallized glass and a transition metal oxide are employed to give sufficient electrical properties and wear resistance. The paste also contains a conductive metal and amorphous glass.

CA 2 440 237 A1 (EP 1 377 984 A1) discloses a conductive paste containing a glass frit, a paste-forming medium, particles made of silver and particles of a base metal. The paste is said to have advantageous resistivity properties and can be soldered under conventional conditions.

US 5,296,413 relates to a thick film paste composition for applying conductive patterns to automotive window glass, comprising finely divided particles of metallic silver, glass frit, and selected transition metal oxides, all of the particulate solids being dispersed in an organic medium.

US 5,645,765 discloses a nontoxic, lead-free conductive paste comprising a lead-free glass frit, finely divided particles of an electrically conductive material, at least one inorganic additive and an organic medium. The paste is said to have excellent solderability, solder leach properties, adhesion strength and electrical properties both on ceramic substrates and on dielectric bodies.

JP2012022841 discloses that to improve solder solubility resistance to a high melting point solder, a conductive paste is provided with a glass frit composed of 16-47 wt% SiO₂, 33 to 52 wt% Al₂O₃, 3 to 15 wt% MgO, and 15 to 45 wt% B₂O₃.

US2006/022173 discloses conductive paste which can have high conductivity even if the sintering temperature is 500°C or less. The conductive paste comprises metal powder which is composed of spherical particles having an average primary-particle diameter of 0.1 to 1 µm and spherical particles having an average primary-particle diameter of 50 nm or less. The paste also comprises glass frit which preferably does not contain lead, has a working point of 500°C or less, and has an average particle diameter of 2 µm or less.

EP1713092 discloses a thick film conductive composition comprising: (a) electrically conductive silver powder; (b) zinc-containing additive; and (c) lead-free glass frit; all dispersed in (d) organic medium. An average particle size of the glass frit is in the range of 0.5-1.5 µm. The glass is produced by conventional glass making techniques and milled to form a powder with its 50% volume distribution set between 1-3 microns.

EP2896602 discloses an electroconductive paste composition for electrode formation in solar cells including spherical silver powder having a particle size D50 of about 0.1 µm to about 1 µm, about 10 to about 30 wt% silver flake having a particle size D50 of about 5-8 µm, substantially lead-free glass frit having a particle size D90 of about 0.5 - 3 µm, and organic vehicle, wherein the glass frit includes less than 5 wt% zinc oxide.

EP2664503 discloses the use of a paste including a lead-free glass frit and the application of the paste to glass substrates, particularly in relation to automotive windscreens. The document also discloses the use of lead-free solder.

EP0977208 discloses a conductive paste comprising a conductive component, a glass frit, and a vehicle, wherein the glass frit comprises a main glass component and at least one selected from the group consisting of alumina (Al₂O₃), silica (SiO₂), titania (TiO₂), and zirconia (ZrO₂).

### Summary of the Invention

The present inventors have found that the use of a conductive paste comprising a conductive metal, an organic medium, and a glass frit in the form of particles with particle size D₉₀ of less than 4 microns, preferably less than 3 microns, more preferably less than 2 microns, allows for the formation of a conductive grid having excellent solderability and improved connector adhesion strength when a lead-free solder is used to solder a connector to the grid. In particular, excellent solderability is observed when the fired conductive paste is soldered to a connector, via a lead-free solder. Good weather, mechanical and chemical resistance is also achieved.

In one aspect, the present invention provides a process for the production of an article of glass with an applied electrically conductive grid, comprising:
a) applying a conductive paste to a glass substrate;
b) firing the paste to form an electrically conductive grid;
c) soldering an electrical connector to the electrically conductive grid via a lead-free solder;
wherein the conductive paste comprises finely divided particles of a conductive metal, particles of glass frit, and an organic medium; and wherein the particles of glass frit have a particle size D₉₀ of less than 4 microns determined using a laser diffraction method.

The use of a conductive paste comprising finely milled glass frit in the process of the present invention provides superior solderability and superior connector adhesion strength and chemical resistance compared with the use of conductive pastes comprising glass frit of larger particle size.

Accordingly, another aspect as described herein provides the use of glass frit, in the form of fine particles with a particle size D₉₀ of less than 4 microns determined using a laser diffraction method, preferably less than 3 microns, more preferably less than 2 microns, in a conductive paste applied to a substrate, fired to form a conductive layer which is then soldered to a connector with a lead-free solder.

According to a further aspect, the present invention provides the use of a conductive paste comprising: finely divided particles of a conductive metal, particles of glass frit having a particle size D₉₀ of less than 4 microns determined using a laser diffraction method, and an organic medium to improve the strength of adhesion of an electrical connector to a conductive grid on a glass substrate.

In a further aspect, the present specification provides an article of glass with an applied electrically conductive grid, which electrically conductive grid is powered through a connector comprising a lead-free solder and comprises a fired conductive paste, wherein prior to firing the conductive paste comprises finely divided particles of a conductive metal, particles of glass frit having a particle size D₉₀ of less than 4 microns determined using a laser diffraction method, and an organic medium.

In yet a further aspect, the present invention provides a vehicle comprising an article of glass with an applied electrically conductive grid, wherein the article of glass is obtained or obtainable by:
a) applying a conductive paste to a glass substrate;
b) firing the paste to form the electrically conductive grid;
c) soldering an electrical connector to the electrically conductive grid via a lead-free solder;
wherein the conductive paste comprises finely divided particles of a conductive metal, particles of glass frit, and an organic medium; and wherein the particles of glass frit have a particle size D₉₀ of less than 4 microns determined using a laser diffraction method.

A kit of parts can also be provided comprising i) a conductive paste comprising finely divided particles of a conductive metal, particles of glass frit, and an organic medium; wherein the particles of glass frit have a particle size D₉₀ of less than 4 microns determined using a laser diffraction method; ii) an electrical connector; and iii) a lead-free solder.

### Detailed Description

Preferred and/or optional features of the invention will now be set out. Any aspect of the invention may be combined with any other aspect of the invention unless the context demands otherwise. Any of the preferred and/or optional features of any aspect may be combined, either singly or in combination, with any aspect of the invention unless the context demands otherwise.

Suitable lead-free solders include solders of the SAC and SACX type referred to above.

The conductive metal of the conductive paste for use in the present invention may be selected from silver, gold, platinum, palladium and mixtures thereof. Preferably, the conductive metal is silver.

The conductive paste may contain the conductive metal in an amount of, for example, 50-90 % by weight of the total weight of said paste. For example, the content of the conductive metal is in the range of 60% to 88% by weight of the total weight of said paste.

In a particular embodiment, silver flakes or silver powder may be used. Alternatively, a mixture of silver flakes and silver powder may be used. In relation to technical effect, there are no particular limitations to the particle size of the silver, but in general a particle size D₉₀ of 0.1 to 15 microns, and especially 0.5 to 5.0 microns, or 1 to 5 microns, is preferred. The term "D₉₀" herein refers to particle size distribution, and a value for D₉₀ corresponds to the particle size value below which 90%, by volume, of the total particles in a particular sample lie.

When the silver particles are larger than 15 microns, the coarseness of the particles slows the sintering process and makes it difficult to achieve the desired resistivity. Particles that are too coarse may also lead to screen blockage, negatively impacting the application process, and lead to a poor end result. When the silver particles are smaller than 0.1 micron, the sintering process may proceed too rapidly, resulting in undesirable effects, such as the rising of glass to the surface during sintering.

In a particular embodiment, the conductive paste of the present invention contains from 50% to 90% by weight, based on the total weight of the paste, of conductive metal particles, for example silver particles, having an average particle size of 1.0 to 5.0 microns. For example, said silver particles may comprise 60% to 88% by weight, based on the total weight of the paste.

Where silver is used as the conductive metal in the present invention, it is preferably of high purity (99+%). However, depending on the electrical requirements of the pattern, it is also possible to use material of lower purity.

The chemical composition of the glass frit has little importance on the function of the invention. For example, bismuth and/or zinc borosilicates and leaded frits are widely used in pastes for automotive glass, and can be used in the present invention. Suitable glass frit binders show high acid resistance and low crystallization proneness combined with a low melting point. Mixtures of different types of glass frit may be employed.

The glass frit of the conductive paste used in the present invention has a particle size D₉₀ of less than 4 microns, preferably less than 3 microns, more preferably less than 2 microns. The particle size is determined using a laser diffraction method (e.g. using a Malvern Mastersizer 2000).

The fine milled glass frit is included in the conductive paste employed in the present invention in an amount of 0.1% to 10.0% by weight, and preferably 3% to 5% by weight based on the total weight of the paste.

A content of more than 10% glass frit may cause sintering of the silver to proceed too far and may also cause glass exudation. A content of less than 0.1% glass frit may result in insufficient sintering and insufficient weather, chemical and mechanical resistance properties.

The conductive paste employed in the present invention may optionally include one or more transition metal oxides. The transition metal oxide(s) may be used to enhance the wear resistance. Suitable oxides include oxides of the transition metals vanadium, manganese, iron and cobalt. The amount required to achieve the desired effect is 3.0% to 15%, and preferably 5.0% to 10.0%, based on the total weight of the paste. At less than 3.0%, an improvement in the wear resistance cannot be expected. Furthermore, if the amount of the transition metal is greater than 15%, resistivity is increased and sintering is adversely affected. Also soldering is negatively affected when higher amounts of non-conductive materials are added.

Mixtures of separately added transition metal oxides can likewise be used, so long as the total amount of such oxides is the same as that indicated above. In cases where the transition metal oxides are separately added, the particle sizes of the oxides are not subject to any narrow limitations from the standpoint of technical effects. However, the particle sizes must be suitable to the method of use and the firing method.

Any suitable inert liquid may be used as the organic medium in the present invention, although a non-aqueous inert liquid is preferred. Use can be made of any one of various organic liquids which may or may not contain a thickener, such as a cellulose derivate, a stabilizer, such as C₁₂ and higher organic acids, and/or other common additives (for example, staining agents, such as carbon black and/or inorganic pigments, rheology modifiers, such as fumed silica and/or polyamide thixotropes, adhesion enhancers and sintering modifiers.

Examples of organic liquids that may be used include alcohols, esters of such alcohols (for example, the acetates and the propionates), terpenes (for example, pine oil, terpineol and the like), solutions of resins (for example, polymethacrylates) in organic liquids, solutions of ethyl cellulose in a solvent (for example, pine oil, or terpineol) and the monobutyl ether of ethylene glycol monoacetate.

A preferred organic medium is composed of ethyl cellulose in terpineol, combined with butyl carbitol acetate.

The organic medium may account for 5 to 50 wt % of the conductive paste. The amount of thickener used depends on the viscosity of the ultimately desired composition. That is, it depends on the conditions required for printing. Preferably, the viscosity of the conductive paste may be in the range 5 to 100 Pa.s measured at 20 S⁻¹ and 20°C.

The conductive paste employed in the present invention may be made by mixing all of the components to form a homogeneous mixture. Said mixture may be dispersed by triple-roll milling until a homogeneous, well-dispersed paste is obtained.

As an example, the paste may be screen-printed, inkjet printed or applied by any other suitable technique on to a desired substrate, and fired. After firing, a connector may be applied by soldering the connector on to the applied paste using a lead-free solder.

The strength of adhesion of the connector to the fired conductive paste may be determined by testing pullstrength, as follows:
The substrate with applied connector is placed under a force gauge. The substrate is held in place and the connector is fixed to the force gauge. The force gauge is connected to a device capable of applying a vertical pulling speed of approximately 1.5 mm/s. The force gauge is then zeroed and the pulling is started. The force gauge is set in a way that shows the maximum applied force in the display. At the moment the bond between the connector and substrate breaks, the force is read from the display. This value is registered as being the pullstrength.

While the composition of the present invention may be utilized on a variety of substrates, the composition has particular utility on glass substrates in the automotive industry. Additionally, the composition of the present invention may have utility on non-automotive glass, such as freezer doors, and display windows.

The conductive paste of the present invention, when used to form an electrically conductive grid on vehicle windows (windshields) and mirrors for use in a defroster system or any other electrical functional circuit application, provides superior pullstrength when a lead free soldering alloy is used to solder the connector to the fired conductive paste, as is demonstrated in the Examples herein. Improvements in weather, chemical and mechanical resistances are also advantageous for the applied product and are also demonstrated by the Examples herein.

The present invention is illustrated by the following non-limiting Examples.

### EXAMPLES

Two commercially available bismuth borosilicate frits (glass frit A and glass frit B) were subjected to ball-milling in water to produce particles having a D₉₀ particle size as set out in Table 1. Particle size distribution was determined via laser diffraction using a Malvern Mastersizer 2000.

Six conductive pastes were prepared each containing about 80% by weight of a commercial silver powder (AEP-2, available from Ames Goldsmith), about 4.5% by weight of the milled glass frit and standard organic media (containing 90% heavy organic solvents such as terpineol and isotridecanol and 10% polymeric solids such as cellulosics). The silver powder, glass frit and a proportion of the organic medium were mixed for 10 to 15 minutes until a homogeneous mixture was obtained. The mixtures were each dispersed by triple-roll milling until a well dispersed paste was acquired. The paste was then diluted with further organic medium until a viscosity suitable for screen printing was achieved. The exact compositions of the prepared conductive pastes and particle sizes of the glass frits are given in Table 1.

**Table 1. Composition of prepared samples**

| | Example 1 (Comp -arative) | Example 2 (Comp -arative) | Example 3 | Example 4 (Comp -arative) | Example 5 | Example 6 |
|---|---|---|---|---|---|---|
| Wt% Silver Powder | 80.2520 | 80.2520 | 80.2520 | 80.2520 | 80.2520 | 80.2520 |
| Wt% Glass frit A | 4.5140 | 4.5140 | 4.5140 | - | - | - |
| Wt% Glass frit B | - | - | - | 4.5140 | 4.5140 | 4.5140 |
| Wt% Organic Medium | 15.2340 | 15.2340 | 15.2340 | 15.2340 | 15.2340 | 15.2340 |
| Milled D₉₀ of Glass Frit | 8-10µm | 4-6µm | < 2µm | 8-10µm | 2.6 µm | 1.3 µm |

### Preparation of evaluation samples

Small-scale defogging circuits were prepared for evaluation of the pastes according to the following procedure. The prepared conductive pastes were applied by screen printing onto a flat glass substrate. The printed pastes were dried at elevated temperatures of 150°C for 10 to 15 minutes until visibly dry. The applied conductive pastes were then fired in an oven suitable for fast firing glass samples, in air, at temperatures of between 680° and 700°C for 180 seconds to form a conductive grid on the glass substrate.

A pre-soldered connector was then applied to each fired sample by soldering the connector onto the fired paste using power controlled soldering. The power controlled soldering was performed by placing two electrodes on the connector above areas where pre-solder was applied. Power was applied until the solder melted and spread evenly over the surface underneath the connector. Power was then removed and the solder allowed to harden and cool.

The connector used in this case is a commercially available pre-soldered on glass connector. The pre-solder on this connector is a SAC(X) type of solder containing 94.5 to 97.5% Sn, 2 to 4% Ag and 0.5% Cu.

Pullstrength was tested by the method described above and the results are presented in Table 2.

**Table 2. Average Pullstrength values**

| | Example 1 (Comparative) | Example 2 (Comparative) | Example 3 | Example 4 (Comparative) | Example 5 | Example 6 |
|---|---|---|---|---|---|---|
| Pb-free solder | 22 Kg | 25 Kg | 38 Kg | 20 Kg | 24 Kg | 34 Kg |

As can be seen from the results presented above, the process of the present invention, illustrated by Examples 3, 5 and 6 above, provides articles of glass with applied electrically conductive grids having superior pullstrength when soldered to a connector with a lead-free solder.

Weather and chemical resistance were measured as follows and the results are presented in Table 3.

### Acid Resistance

### - Immersion Test

Lidded glass jars filled with 0.1N H₂SO₄ test solution to a level of ca. 5 cm above the bottom of the jars were placed into an oven set at 80 °C, with the lids tightly secured. After a minimum of 4 hours at 80°C the jars were removed from the oven and evaluation samples prepared as above were placed into the test solutions such that the circuits were half-immersed. The lids of the jars were closed tightly and the jars placed back into the oven at 80 °C.

After 4, 5, 6, 7, 8, 9, 16, 20 and 24 hours, samples were taken out of the test solution, rinsed with tap water and air dried.

Release of the conductive grid from the substrate was visually assessed. Visual assessments were performed both before and after treatment.

### - Tape test

Strips of adhesive tape, e.g., "Scotch 2517", were applied over the test area, left for 24 hours, and pulled off. Release of the conductive grid from the substrate was visually assessed. Again, visual assessments were performed both before and after treatment.

Resistance (R) before and after the immersion test and after the tape test was measured. The absolute and percentage change in resistance is calculated from each strip.

Visual and calculated judgement before and after the tape test:
- OK : No delamination, or minor damage to the circuit with no line breakage and ΔR<10%.
- NOK : Delamination or line breakage of the circuit and/or ΔR>10%.

The results of the acid resistance testing are shown in Table 3 below.

### Weather Resistance

Evaluation samples prepared as above were visually assessed before testing.

Plastic bags were filled with moisturized hydrophilic cotton saturated with water, and evaluation samples placed therein with the printed surfaces contacting the cotton. The bags were closed tightly, sealed and placed into a climate chamber set at 80 °C and 96% RH. Samples were removed at 7, 14 and 21 days, rinsed with tap water and air dried.

Immersion tests and tape tests were carried out as above.

The results of the weather resistance testing are shown in Table 3 below.

**Table 3. Weather and Chemical Resistance**

| | Example 1 | Example 2 | Example 3 | Example 4 | Example5 | Example 6 |
|---|---|---|---|---|---|---|
| Weather Resistance | < 21 Days NOK | < 21 Days NOK | n.t. | n.t. | n.t. | > 21 days OK |
| Acid resistance | n.t. | < 5 Hours NOK | n.t. | n.t. | n.t. | > 24 Hours OK |
| Acid/Tape resistance | n.t. | < 4 Hours NOK | n.t. | n.t. | n.t. | > 9 Hours OK |

| | | | | | | |
|---|---|---|---|---|---|---|
| n.t. not tested | | | | | | |

## Claims

1. A process for the production of an article of glass with an applied electrically conductive grid comprising:
a) applying a conductive paste to a glass substrate;
b) firing the paste to form the electrically conductive grid;
c) soldering an electrical connector to the electrically conductive grid via a lead-free solder;
wherein the conductive paste comprises finely divided particles of a conductive metal, particles of glass frit, and an organic medium; and wherein the particles of the glass frit have a particle size D₉₀ of less than 4 microns determined using a laser diffraction method.

2. A process as claimed in claim 1 wherein the the particles of the glass frit have a particle size D₉₀ of less than 3 microns, preferably less than 2 microns.

3. A process as claimed in claim 1 or 2, wherein the glass frit comprises bismuth and/or zinc borosilicate compounds.

4. A process as claimed in any preceding claim, wherein said glass frit is present in an amount of 0.1-10 % by weight of the total weight of said paste, preferably in an amount of 3-5 % by weight of the total weight of said paste.

5. A process as claimed in any one of the preceding claims, wherein said conductive metal is present in an amount of 50-90 % by weight of the total weight of said paste, preferably in present in an amount of 60-88 % by weight of the total weight of said paste.

6. A process as claimed in any one of the preceding claims, wherein said conductive metal is silver.

7. A process as claimed in claim 6, wherein said silver has an average particle size of 0.1 to 15 microns, preferably 0.5 to 5.0 microns.

8. A process as claimed in any one of the preceding claims, wherein said organic medium comprises of ethyl cellulose, terpineol, and butyl carbitol.

9. A process as claimed in any one of the preceding claims, wherein said organic medium is present in an amount of 5-50% by weight of the total weight of said paste.

10. A process as claimed in any one of the preceding claims, wherein the paste further comprises a transition metal oxide in an amount of 3-15% by weight of the total weight of said paste.

11. A process as claimed in any preceding claim wherein the lead-free solder comprises tin, silver, and copper.

12. A process as claimed in claim 11, wherein the lead-free solder further comprises nickel, cobalt, zinc or bismuth.

13. A process as claimed in any preceding claim, wherein step a) is carried out by screen printing.

14. A process as claimed in any of claims 1 to 12, wherein step a) is carried out by ink-jet printing.

15. Use of a conductive paste comprising: finely divided particles of a conductive metal, particles of glass frit having a particle size D₉₀ of less than 4 microns determined using a laser diffraction method, and an organic medium to improve the strength of adhesion of an electrical connector to a conductive grid on a glass substrate.

16. A vehicle comprising an article of glass with an applied electrically conductive grid, wherein the article of glass is obtained or obtainable by the process as claimed in any of claims 1 to 14.

## Patentansprüche

1. Verfahren zur Herstellung eines Gegenstandes aus Glas mit einem aufgebrachten elektrisch leitfähigen Gitter, umfassend:
a) Aufbringen einer leitfähigen Paste auf einem Glassubstrat;
b) Brennen der Paste zum Bilden des elektrisch leitfähigen Gitters;
c) Anlöten eines elektrischen Verbinders an das elektrisch leitfähige Gitter mit einem bleifreien Lot;
wobei die leitfähige Paste fein verteilte Teilchen eines leitfähigen Metalls, Teilchen einer Glasfritte und ein organisches Medium umfasst; und wobei die Teilchen der Glasfritte eine Teilchengröße D₉₀ von weniger als 4 Mikrometer, bestimmt unter Verwendung eines Laserbeugungsverfahrens, aufweisen.

2. Verfahren nach Anspruch 1, wobei die Teilchen der Glasfritte eine Teilchengröße D₉₀ von weniger als 3 Mikrometer, vorzugsweise von weniger als 2 Mikrometer, aufweisen.

3. Verfahren nach Anspruch 1 oder 2, wobei die Glasfritte Wismut- und/oder Zink-Borsilikat-Verbindungen umfasst.

4. Verfahren nach einem der vorhergehenden Ansprüche, wobei die Glasfritte in einer Menge von 0,1-10% Gew.-% des Gesamtgewichts der besagten Paste, vorzugsweise in einer Menge von 3-5% Gew.-% des Gesamtgewichts der besagten Paste vorhanden ist.

5. Verfahren nach einem der vorhergehenden Ansprüche, wobei das leitfähige Metall in einer Menge von 50-90% Gew.-% des Gesamtgewichts der besagten Paste, vorzugsweise in einer Menge von 60-88% Gew.-% des Gesamtgewichts der besagten Paste vorhanden ist.

6. Verfahren nach einem der vorhergehenden Ansprüche, wobei das leitfähige Metall Silber ist.

7. Verfahren nach Anspruch 6, wobei das Silber eine durchschnittliche Teilchengröße von 0,1 bis 15 Mikrometer, vorzugsweise 0,5 bis 5,0 Mikrometer, aufweist.

8. Verfahren nach einem der vorhergehenden Ansprüche, wobei das organische Medium Ethylcellulose, Terpineol und Butylcarbitol umfasst.

9. Verfahren nach einem der vorhergehenden Ansprüche, wobei das organische Medium in einer Menge von 5-50% Gew.-% des Gesamtgewichts der besagten Paste vorhanden ist.

10. Verfahren nach einem der vorhergehenden Ansprüche, wobei die Paste ferner ein Übergangs-Metalloxid in einer Menge von 3-15% Gew.-% des Gesamtgewichts der besagten Paste umfasst.

11. Verfahren nach einem der vorhergehenden Ansprüche, wobei das bleifreie Lot Zinn, Silber und Kupfer umfasst.

12. Verfahren nach Anspruch 11, wobei das bleifreie Lot ferner Nickel, Kobalt, Zink oder Wismut umfasst.

13. Verfahren nach einem der vorhergehenden Ansprüche, wobei Schritt a) durch Siebdruck durchgeführt wird.

14. Verfahren nach einem der Ansprüche 1 bis 12, wobei Schritt a) durch Tintenstrahldruck ausgeführt wird.

15. Verwendung einer leitfähigen Paste, umfassend: Fein verteilte Teilchen eines leitfähigen Metalls, Teilchen einer Glasfritte mit einer Teilchengröße D₉₀ von weniger als 4 Mikrometern, bestimmt unter Verwendung eines Laserbeugungsverfahrens, und ein organisches Medium zur Verbesserung der Haftfestigkeit eines elektrischen Verbinders an einem leitfähigen Gitter auf einem Glassubstrat.

16. Träger, umfassend einen Gegenstand aus Glas mit einem aufgebrachten elektrisch leitfähigen Gitter, wobei der Gegenstand aus Glas durch das Verfahren nach einem der Ansprüche 1 bis 14 erhalten wird oder erhältlich ist.

## Revendications

1. Procédé pour la production d'un article en verre présentant une grille appliquée électriquement conductrice, comprenant :
a) l'application d'une pâte conductrice sur un substrat en verre ;
b) la cuisson de la pâte pour former une grille électriquement conductrice ;
c) le soudage d'un connecteur électrique sur la grille électriquement conductrice via une soudure exempte de plomb ;
la pâte conductrice comprenant des particules finement divisées d'un métal conducteur, des particules de fritte de verre et un milieu organique ; et les particules de fritte de verre présentant une grosseur de particule D₉₀ inférieure à 4 microns, déterminée à l'aide d'un procédé de diffraction de rayon laser.

2. Procédé selon la revendication 1, les particules de la fritte de verre présentant une grosseur de particule D₉₀ inférieure à 3 microns, de préférence inférieure à 2 microns.

3. Procédé selon la revendication 1 ou 2, la fritte de verre comprenant des composés de type borosilicate de bismuth et/ou de zinc.

4. Procédé selon l'une quelconque revendication précédente, ladite fritte de verre étant présente en une quantité de 0,1-10% en poids du poids total de ladite pâte, de préférence en une quantité de 3-5% en poids du poids total de ladite pâte.

5. Procédé selon l'une quelconque des revendications précédentes, ledit métal conducteur étant présent en une quantité de 50-90% en poids du poids total de ladite pâte, de préférence présent en une quantité de 60-88% en poids du poids total de ladite pâte.

6. Procédé selon l'une quelconque des revendications précédentes, ledit métal conducteur étant l'argent.

7. Procédé selon la revendication 6, ledit argent présentant une grosseur moyenne de particule de 0,1 à 15 microns, de préférence de 0,5 à 5,0 microns.

8. Procédé selon l'une quelconque des revendications précédentes, ledit milieu organique étant constitué d'éthylcellulose, de terpinéol et de butyl carbitol.

9. Procédé selon l'une quelconque des revendications précédentes, ledit milieu organique étant présent en une quantité de 5-50% en poids du poids total de ladite pâte.

10. Procédé selon l'une quelconque des revendications précédentes, la pâte comprenant en outre un oxyde de métal de transition en une quantité de 3-15% en poids du poids total de la pâte.

11. Procédé selon l'une quelconque revendication précédente, la soudure exempte de plomb comprenant de l'étain, de l'argent et du cuivre.

12. Procédé selon la revendication 11, la soudure exempte de plomb comprenant en outre du nickel, du cobalt, du zinc ou du bismuth.

13. Procédé selon l'une quelconque revendication précédente, l'étape a) étant effectuée par sérigraphie.

14. Procédé selon l'une quelconque des revendications 1 à 12, l'étape a) étant effectuée par impression par jet d'encre.

15. Utilisation d'une pâte conductrice comprenant : des particules finement divisées d'un métal conducteur, des particules de fritte de verre présentant une grosseur de particule D₉₀ inférieure à 4 microns, déterminée à l'aide d'un procédé de diffraction de rayon laser, et un milieu organique pour améliorer la force d'adhérence d'un connecteur électrique à une grille conductrice sur un substrat en verre.

16. Véhicule comprenant un article en verre présentant une grille appliquée électriquement conductrice, l'article en verre étant obtenu ou pouvant être obtenu par un procédé selon l'une quelconque des revendications 1 à 14.
